# EUROPEAN PATENT APPLICATION

(11) **EP 0 668 332 A2**
(43) Date of publication of application: **23.08.1995**
(21) Application number: 95301170.7
(22) Date of filing: 22.02.1995
(51) Int. Cl.: C09D 11/02

(54) **Radiation-curable pigmented ink compositions and methods of decorating articles therewith**

(30) Priority: 22.02.1994 US 199414
(71) Applicant: Revlon Consumer Products Corporation, New York, NY 10022 (US)
(72) Inventor: Kamen, Melvin Edwin, Highlands, New Jersey 07732 (US); Patel, Bhupendra, Edison, New Jersey 08820 (US)
(74) Representative: Sanderson, Laurence Andrew

(57) **Abstract**

A radiation-curable, pigmented ink composition comprises a radiation-curable component and pyrrolopyrrol and/or isoindolinone pigment(s); a method for decorating a substrate with these pigmented ink compositions; and a method for decorating a substrate with these pigmented ink compositions in conjunction with hot-stamping foil.

## Description

This invention relates to radiation-curable pigmented ink compositions, and methods of decorating articles therewith.

Commercial ceramic and glassware is traditionally decorated by applying a design in coloured ink onto the surface of the substrate, by means of screen printing, offset printing or any other direct application technique; and the thus decorated substrate is then fired, so as to burn off the organic components of the ink, and cause the ink design to "fuse" onto the surface of the glass. This traditional process however is time-consuming and energy-intensive, and at best results in heavy operational costs, and a requirement for significant floor space in factories. A further disadvantage of this long-established procedure is that the applied decoration until it has been fired is extremely prone to damage caused by the rubbing and scratching that occurs in normal handling operations, and this results in many rejects.

Radiation-curable adhesives are known, and in our previous European Application No. 93 3 04160.0, now EPA 0,626,354, we have described and claimed methods and ink compositions for decorating glass in which usually-colourless inks based upon such radiation-curable adhesives are applied to the surface and, after curing thereon by radiation, hot-stamping foil is applied to the cured ink so as thus to decorate the glassware. This relatively new procedure offers significant advantages over the traditional method, because radiation-curing is easy and inexpensive, requiring only lamps that emit the desired wavelength of light (or, in the case where no photopolymerization agent is included in the ink, an electron beam) so that there is no requirement for much floor space, and moreover the hazards and energy expenditures encountered in the use of firing ovens are totally eliminated.

Although the inks employed in this relatively new procedure are usually colourless, we did in our EPA 0,626,354 aforesaid envisage the possibility that they could perhaps be pigmented. That proposal however was more theoretical than practical, because in general all pigments tend to absorb actinic radiation and thus interfere with the radiation curing of a pigmented radiation-curable ink. This problem of interference with radiation curing moreover becomes most acute with red and yellow pigments, which absorb actinic radiation in the range of from 4nm up to 600nm to so great an extent that radiation curing in the presence of red and yellow pigments is extremely difficult to achieve.

Nor are these the only problems that arise with pigmented inks. The standard inorganic pigments that have traditionally been employed in decoration are compounds of heavy metals e.g. cadmium, chromium, manganese &c., and such inorganic, heavy metal compounds are these days coming under increasingly hostile scrutiny due to environmental concerns about heavy metals, especially cadmium and chromium, so it is becoming less desirable to use them for decoration purposes. Still further, inks coloured with inorganic pigments often exhibit poor colouration (e.g. reds often look brown or purple) and are then unacceptable for commercial decorating purposes.

Thus, there is a need for radiation-curable inks which cure easily, which impart bright, clear red and yellow colours acceptable for commercial decoration, and which are free from environmental concerns.

We have searched far and wide for pigments free from these troubles, and we have at last now found that there are just two classes of organic pigments (which are red and yellow respectively) that are free from environmental concerns, that can be incorporated into radiation-curable ink compositions which are easily curable directly on a substrate, and that after curing will provide red and yellow-coloured designs which are bright, true and adhere well to the substrate. These advantages moreover can be secured no matter whether the substrate is glass, plastics or ceramic, and whatever form it may take, such as for instance containers such as bottles, cups, dishes and glasses, as well as vases, figurines and other decorative glassware and ceramic ware, and indeed glass or ceramic sheets, tiles and so on.

According to one aspect of the present invention there is provided a radiation-curable pigmented ink composition which comprises:
a) a radiation-curable component which, when applied directly to a substrate and exposed to radiation by which is curable, can be cured to bond to the substrate; and
b) a pigment component which consists of or contains one or a mixture of more than one pyrrolopyrrol and/or isoindolinone pigment(s).

One of the necessary elements of radiation-curable composition is a radiation-curable component, which may consist of monomers, oligomers and/or low molecular weight homopolymers, as well as copolymers, terpolymers, graft copolymers or block copolymers, so long as the component is curable (polymerized) by exposure to an electro beam or to actinic (including ultraviolet) radiation.

At this point it is perhaps desirable, for the avoidance of doubt, to observe that the terms "actinic radiation" and "ultra-violet radiation" are here used in their normal sense, that is to say:
the term "actinic radiation" in general means light in the violet and ultra-violet regions which will bring about chemical changes, and may be regarded as corresponding to wavelengths of from 4 to 600nm; and
the term "ultra-violet (or UV) radiation" refers to the non-visible part of the actinic radiation, and may be regarded as corresponding to wavelengths of from 4 to 400nm., and preferably (for present purposes) 325-365nm.

The radiation-curable component to be commercially-acceptable must of course be capable, after it has been cured, of bonding the cured composition to the substrate permanently - that is to say it must be affixed to the substrate to a degree sufficient for it to remain on the substrate for the useful life of the substrate. For example, where the substrate is to be a container for nail enamel, the cured ink must remain on the container throughout the useful life of the nail enamel, and remain resistant to the solvents and other ingredients found in the nail enamel.

In the preferred embodiment of the invention, the radiation-curable component is curable by ultraviolet (UV) radiation having wavelengths of from 4nm to 400nm, and preferably 325nm to 365nm.

Suitable monomers include epoxides, cycloaliphatic epoxides, vinyl chloride, styrene, ethyl acrylate, vinyl acetate, bifunctional acrylic monomers such as hydroxy alkyl acrylates or hydroxy alkyl methacrylates, vinyl butyrate, vinyl methyl ether, methyl methacrylate, isobornyl acrylate and acrylonitrile, or mixtures thereof.

Suitable polymers include oligomers, homo- or copolymers, terpolymers and graft copolymers of the above monomers provided they have a molecular weight of less than about 50,000, since otherwise it is too difficult to effect polymerization.

The particularly preferred radiation-curable polymers are cationically radiation-curable epoxides. The term "cationically radiation-curable" is here used in the sense that it has become accepted in the radiation-curing art, and roughly-speaking means that the radiation-curing takes place in air - as contrasted with anionic curing, which must take place under anaerobic conditions.

The cationically radiation-curable epoxides preferably used are those having at least two epoxy groups per molecule, as well as those which are polymeric, such as the reaction products between epichlorohydrin and phenol or a phenolformaldehyde resin, also diepoxy resin, epoxidized oils and epoxidized polylefins. Such epoxides include novolac epoxides, glycidyl ethers of various types including diglycidyl ethers of bisphenol and diglycidyl ethers of butanediol. Also suitable are homo-polymers and co-polymers that contain pendant epoxide groups, such as those made from glycidyl acrylate and or methacrylate with or without other ethylenically-unsaturated monomers, e.g. vinyl chloride, vinyl chloride, vinyl acetate, styrene, hydroxyethyl acrylate, hydroxpropyl acrylate, and so on.

The specific preferred epoxide-type polymers are cationically W-curable cycloaliphatic epoxides including those set forth in U.S. Patents Nos. 3,027,357, 3,890,194, 2,890,197, 3,031,434, 3,125,592, 3,201,360 and 5,204,930 the disclosure of all of which is hereby incorporated herein by cross-references.

Particularly preferred are:
3,4-epoxycyclohexylmethyl-3,4,epoxycyclohexanecarboxylate, bis-(3,4-epoxy-cyclohexylmethyl)-adipate, vinylcyclohexene diepoxide, bis(2,3-epoxycyclophenyl)ether, epoxidized butadiene and 2,3-epoxy-2-methylcyclohexyl-methyl-3,4-epoxy-2-epoxy-2-methylcyclohexane carboxylate.

The particularly preferred radiation-curable components are the cationically-UV-curable cycloaliphatic epoxides sold under the tradename CYRACURE by Union Carbide Chemicals and Plastics Company, Danbury, Connecticut. U.S.A., such as CYRACURE UVR 6110, 6100, 6379, 6351 and 6200.

Generally the radiation-curable component should constitute about from 10% to 95% by weight of the total composition, preferably from 15% to 70%, and usually most advantageously from 35% to 85%.

The other necessary element of the radiation-curable composition is a pigment-component which for the purposes of this invention must be narrowly selected from the vigments, and specifically has to be based upon pyrrolopyrrol and/or isoindoline pigment(s), environmentally-friendly, (b) do not significantly interfere with radiation curing of the composition, and (c) yield bright, true red and yellow colours respectively in the cured ink.

As such these classes of pyrrolopyrrol pigments and respectively isoindoline pigments are already known, and indeed excellent ones are commercially-available, so that they do not require further identification herein.

Nevertheless, in case any further information is wanted concerning the pyrrolopyrrol pigments we note that they are for instance described in U.S. Patents Nos. 4,415,685, 4,579,949, 4,791,204, 4,666,455, 5,074,918, 4,784,540, 4,632,704, 4,914,211 and 4,585,878, the disclosure of all of which is incorporated herein by cross-reference.

And for still further guidance, at least most of these pyrrolopyrrol pigments are embraced by the general formula: 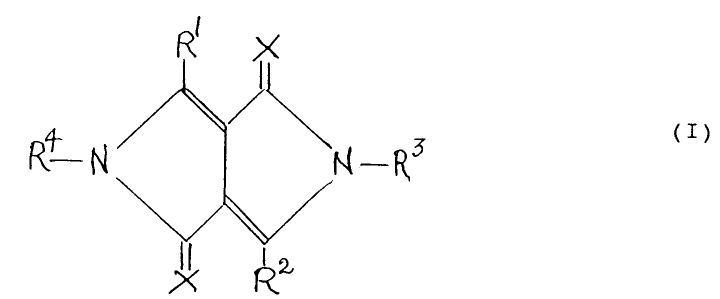
wherein:
R¹ and R², which may be the same or different, are each alkyl or arylalkyl, aryl or substituted or unsubstituted isocyclic or heterocyclic aromatic radicals;
R³ and R⁴, which may be the same or different, are each an hydrogen atom or a substituted or unsubstituted alkyl, alkoxycarbonyl, aroyl, phenyl, benzoyl, benzyl, arylalkyl, aryl, alkanoyl, C₅₋₆ cycloalkyl, alkenyl, carbamoyl, alklcarbamoyl or alkoxycarbonyl radical; and X is an oxygen or sulphur atom.

The preferred pyrrolopyrrol pigments of general formula I above are those wherein R¹ and R² are each independently phenyl or naphthyl, R³ and R⁴ are both hydrogen and X is oxygen.

The particularly preferred pyrrolopyrrol pigment for use in the compositions of this invention is pyrrolo 3,4-C pyrrol-1,4-dione-2,5-dihydro-3,6-di-4-chlorophenyl, which has CAS number 84632-65-5 and is known by the common name C.I. Pigment Red 254. This is commercially available from Ciba-Geigy Pigments Division, Newport, Delaware, U.S.A. under the tradename IRGAZIN DPP Red 80. Other Ciba-Geigy red pigments sold under the tradename IRGAZIN are also suitable.

And again, in case any further information is wanted concerning the isoindolinoine pigments we note that they are for instance described in U.S. Patents Nos. 3,884,955, 3,867,404, 4,978,768, 4,400,507, 3,897,439, 4,262,120 and 5,194,088, the disclosure of all of which is incorporated herein by cross-reference.

Preferred isoindolinones are tetrachlorocyanobenzoic acid alkyl esters, particularly 2,3,4,5-tetrachloro-6-cyano-benzoic acid methyl ester which is reacted with 2-methyl-1,3-benzenediamine and sodium methoxide. This pigment composition has the common name C.I. Pigment Yellow 109, and is available commercially from Ciba-Geigy Pigments Division, Newport, Delaware, U.S.A. under the tradename IRGAZIN Yellow 2GLTE. Other pigments in the IRGAZIN Yellow series as manufactured by Ciba-Geigy are also suitable.

The radiation-curable component may also include ester-containing polyols having a molecular weight of less than 850, and a viscosity of less than 0.6Pa s (60 poises).

These ester-containing polyols are prepared by methods well known in the esterification or alkyd resin art. Suitable polyols are these described in U.S. Patent No. 3,994,851, the disclosure of which is hereby incorporated by cross-reference. The ester-containing polyols are reaction products between polycarboxylic acids (such as adipic, azelic, malic, fumaric, succinic or glutaric acids) and polyols ( such as ethylene glycol, neopentyl glycol, diethylene glycol, trimethylolpropane monoallyl ether or 1,6-hexanediol, etc.).

We particularly prefer to employ the polyols sold under the tradename "TONE Polyols" by Union Carbide. Particularly preferred is/are TONE Polyol 310 or trimethylolpropane caprolactone.

The proportion of ester-containing polyol is not very critical, but we recommend the use of from 1 to 12% by weight, and preferably from 3 to 15%, of the ester-containing polyol.

When the radiation-curable component is to be cured by UV or other actinic radiation (rather than by an electron beam) it is then very desirable that the composition should include a photoinitiator, which will catalyze polymerization of the component upon exposure to the radiation to which the component is sensitive. If an electron beam is used to cure the composition it may be possible to dispense with a photoinitiator.

Since however one cannot be sure what type of radiation will be used, it is always desirable to formulate the radiation-curable component so as to be curable upon exposure to UV or other actinic radiation, even if it turns out subsequently that the radiation-curable component is actually cured by an electron beam. It is therefore always desirable that the radiation-curable component should incorporate a photoinitiator.

Carbonyl compounds such as ketones and derivatives thereof are especially suitable for this purpose. Thus for example methyl ethyl ketone, benzophenone, benzyl dimethyl ketal, 1-hydroxycycylohexylphenylketone, 2,2-dimethoxy-2-phenylacetophenone, diethoxyacetophenone and 2-methyl-1-(methylethiophenyl)-2-(4-morpholinyl)-1-propanone are all excellent photoinitiators.

Other photosensitive onium salts are also particularly good UV-activated photoinitiators. The use of photosensitive onium salts to promote the curing of epoxides when exposed to UV radiation is described in U.S. Patents Nos. 4,058,401, 4,138,255 and 4,161,478, the disclosure of all of which is incorporated herein by cross-reference. The photosensitive onium salts mentioned in these Patents are good UV-light photoinitiators. Triaryl sulphonium salts are preferred, in particular a triaryl sulphonium salt sold by Union Carbide under the tradename CYRACURE UVI 6974.

The proportion of photoinitiator is not critical, but we normally recommend the use of from about 1 to 20%, preferably 3 to 15%, by weight.

It may also be advantageous to include one or more defoaming agents in the composition. Such defoamers assist in applying the ink more smoothly on the substrate, without bubbles or unevenness.

A wide variety of defoamers are suitable, but preferred ones include polyalkyl acrylics, such as the polyvinyl butyl ether in Stoddard solvent sold under tradenames BYK-052 and BYK-053 by BYK-Chemie. Stoddard solvent is a petroleum distillate, widely used as a dry-cleaning solvent, with a minimum flash point of 35° (100°F) and a distillation range range of from not less than 50% over at 177°C (350°F) up to an end point not higher than 210° (410°F) as sold under the tradenames BYK-052 and BYK-053 by BYK-Chemie.

Generally from 1 to 20%, by weight of the composition, and preferably from 3 to 15%, of a defoaming agent is suggested.

The radiation-curable component may also include an adhesion promoter, that is to say an agent that increases the adhesion of the radiation-curable component to the substrate.

The substrates which can be decorated with the ink composition of this invention include glass, ceramics, plastics, tiles and so on. When the substrate is glass, silanes are recommended as adhesion-promoters, since they are excellent coupling agents with glass, and will promote adhesion of the radiation-curable component to a glass or ceramic substrate.

For use as adhesion promoters we recommend acryloxy-functional silanes, such as those described in U.S. Patent No 5,221,560, the disclosure of which is incorporated herein by cross-reference. Examples of such acryloxy-functional silanes include:
3-methacryloxypropyltrimethyoxysilane,
3-acryloxypropyltrimethyoxysilane,
2-methacryloxyethyltrimethoxysilane,
2-acryloxyethyltrimethoxysilane,
3-methacryloxypropyltriethoxysilane,
3-acryloxypropyltrimethoxysilane,
3-acryloxpropyltriethoxylsilane,
2-methacryloxyethyltriethoxysilane,
2-methacryloxyethyltriethoxysilane, and
2-acryloxyethyltriethoxysilane.

Glycidoxy-functional silanes are also suitable as adhesion promoters, including for instance glycidoxy silanes such as:
3-glycidoxypropyltrimethoxysilane,
2-glycidoxyethyltrimeoxysilane,
3-glycidoxypropyltriethoxysilane,
2-glycidoxyethyltriethoxysilane,
3-glycidoxypropyltrimethyl silane and so on.

We prefer to employ the glycidoxy silanes, in particular 3-glycidoxypropyltrimethyl silane.

The proportion of adhesion promoter used is not critical, but we have found that about from 1% to 10% by weight thereof will usually suffice to impart improved adhesion of the composition to the substrate.

Other ingredients may be added to the radiation-curable composition, including stabilizers, inert fillers, wetting agents, leveling agents and so on. If present, these ingredients will normally constitute about from 1% to 15% by weight of the total composition.

The pigment component of the radiation-curable, adhesive, pigmented composition of this invention may constitute from about 1% up to 50% by weight of the total composition, and preferably from about 15% to 35%.

The red and/or yellow pigments may be used alone or mixed, as desired to achieve the appropriate shade of colour. Particularly nice shades of red are achieved by using mixtures of from 5% to 50%, and preferably 10-40%, of the red pigment with from 0.5% to 20%, and preferably 1-12%, of the yellow pigment.

The radiation-curable, adhesive pigmented ink compositions of this invention will preferably contain from about 15% to 40% of said pigment(s) and from 55% to 85% of the radiation-curable component.

Particularly preferred compositions comprise:
- from 15% to 40% of isoindolinone and/or pyrrolopyrrol pigment(s);
- from 35% to 85% of the radiation-curable component, preferably a cationically UV-cured cycloaliphatic epoxide; and
- from 3% to 15% of ester-containing polyol.

The above described compositions will usually and advantageously also contain from 3% to 15% by weight of a photoinitiator and/or from 3% to 15% by weight of a defoaming agent.

When the radiation-sensitive, adhesive pigmented composition is to be used to decorate glass or ceramics, it is then desirable to include from about 1% to 10% of a silane, so as to enhance adhesion to the glass substrate.

According to another aspect of this invention there is also provided to a method for applying a coloured design to a substrate, in which:
a) a pigmented ink composition as herein disclosed, which comprises a radiation-curable component and a pigment component which consists of or contains one or a mixture of more than one pyrrolopyrrol and/or isoindolinone pigment(s), is applied to the substrate in a predetermined design, said ink being capable when cured of bonding to the substrate; and
b) the ink on the substrate is cured thereon by exposing it to the radiation by which it is curable, thereby bonding the ink to the substrate.

Although the pigmented composition can be applied to the entire surface of the substrate, it is normally preferred that the predetermined design which is applied should leave some areas of the substrate ink-free. The ink can be applied by a variety of methods, including screen-printing, offset-printing, hand-painting and the like.

After the ink has been applied, the substrate is irradiated by a conventional source of UV or other actinic radiation, or perhaps with an electron beam.

The most convenient UV-light source is usually a so-called UV-conveyor, set up so that the substrate passes through for a period of time cumulatively sufficient to cure the ink composition completely and thus cause it to adhere to the substrate. If desired, the substrate may be moved through the conveyor in one or more passes, in order to achieve the required curing. The appropriate time varies depending on the nature of the substrate, but generally-speaking curing can be accomplished within an overall period of from 1 to 30 minutes, more preferably within 3-25 minutes.

When the substrate finally emerges from the conveyor, the ink has been completely cured and bonded to the substrate surface, and provides a bright, fast, appealing red or yellow colour depending on the pigment used.

The pigmented inks of this invention exhibit a most unexpectedly excellent opacity, when screened onto dark-coloured substrates, even when using a very fine mesh screen (e.g. 310 to 320 mesh). When normal inorganic-based printing inks are silk screened onto dark-coloured substrates, usually two to three applications are necessary because the ink is not sufficiently opaque, for instance black plastic will show through. In such cases decorators will often first screen white indicia onto a dark-coloured container, and then screen any coloured ink over it in order to achieve the appropriate colouration. Unexpectedly, the organic-based inks of this invention exhibit colour which is equivalent to what can be achieved by multiple applications of inks based upon traditional inorganic pigments, and possibly better. As stated above, even when applied through very fine screens the inks of the invention exhibit excellent opacity on dark-coloured substrates, so that usually only one application is necessary, which makes considerable time and cost savings possible.

Another possibility is to produce a decorated substrate which has a two-tone effect, by arranging that a portion (but not all) of the coloured ink on the substrate is hot-stamped.

According to a further aspect of this invention there is also provided a method for decorating a substrate with coloured ink and hot-stamping foil, which comprises the steps of:
a) applying a pigmented ink composition, comprising a radiation-curable component and one or a mixture of more than one pyrrolopyrrol and/or isoindolinone pigment(s), to the substrate in a predetermined design, said ink being capable when cured of bonding to the substrate;
b) curing the ink on the substrate by exposing it to the radiation by which it is curable, thereby bonding the ink to the substrate,
c) pressing a sheet of hot-stamping foil against the substrate with a hot compress heated to a temperature sufficient to cause a portion of the foil to adhere to the heated, cured ink design but not to the ink-free areas on the substrate; and
d) removing the die thereby leaving behind a portion of the foil adhered to the ink design.

Thus, a substrate such as a container may be decorated in a predetermined design by silk-screening the ink composition onto the substrate and curing it with either an electron beam or the appropriate other actinic radiation. Then a layer of hot-stamping foil is pressed against the substrate , using a hot compress heated to a temperature sufficient to cause the hot-stamping foil to adhere to parts only of the printed ink design but not elsewhere.

Hot-stamping foil is generally a laminate comprising at least a carrier material (often polyester or a similar material capable of release), a release film and a decorative coat, which is usually colour or a metallized coat, most often aluminium or coloured aluminium. The foil may also contain other optional layers, such as one or more protective layers and the carrier material.

More specifically, hot-stamping foil can be regarded as a multilayer web, comprising a backing film carrier, a release coating, one or more protective top-coatings, one or more colour coatings and a hot melt adhesive, in that order.

The hot-stamping foil is compressed against the container with the hot-melt adhesive layer in contact with the substrate. The compress, which may be a standard hot-stamping die or a hand-held press (but appropriately shaped to define the design to be transferred), is heated to a temperature sufficient to cause the hot-melt adhesive layer of the hot-stamping foil to adhere to some (or even all) of the ink-decorated portion of the substrate.

Generally this temperature ranges from about 394K to 478K (250-400°F). Temperatures higher than this range are liable to cause deterioration of the hot-stamping foil, or even some decomposition of the ink. The application of the heat causes the adhesive side of the hot-stamping foil to become adhered to the ink design, but not to the ink-free areas of the substrate.

When the compress is removed, a portion of the foil laminate adheres to the ink decoration but not to the ink-free areas of the glass (or other) substrate. In particular, adhered to the coloured design on the substrate is the hot-melt adhesive layer, the colour coating and the protective coat, in that order.

Portions of the release coating may or may not remain adhered to the protective top-coat because the release coating is designed to melt upon application of heat and cause the polyester carrier backing layer to release itself from the protective top-coat layer, and some remnants thereof may remain.

The coloured ink design on the substrate can be fully or partially hot-stamped (according to the desired design) to yield a pleasant two-tone metallic/colour design on the substrate.

In addition, when the substrate is plastic, the ink design can be applied and cured and then the hot-stamping foil can be pressed by the heated compress onto any area of the container, including both the ink design and the underlying thermoplastic substrate, because the relatively low melting point of the plastic permits direct adhesion of hot-stamping foil to the plastic, without any necessity for an intermediate ink layer.

The invention will now be described in more detail,though for the purpose of illustration only, with reference to the following examples:

### EXAMPLE 1

An orange-red coloured ink composition in accordance with the invention was made up as follows:

| | Grams | w/w% |
|---|---|---|
| Cationically UV-curable cycloaliphatic epoxide (CYRACURE UVR 6110) | 50.00 | 50.63 |
| Ester-containing polyol (POLYOL 310) | 6.25 | 6.33 |
| Photoinitiator (CYRACURE UVI 6974) | 5.00 | 5.06 |
| Defoaming agent (BYK-053) | 7.50 | 7.59 |
| Red Organic Pigment (IRGAZAN Red DPP 80) | 25.00 | 25.32 |
| Yellow Organic Pigment (IRGAZAN Yellow 2GLTE) | 5.00 | 5.07 |

The first three ingredients were mixed together, followed by the pigments.

The ink was then transferred onto the outer surface of a glass container, using a silk-screen process.

Then the glass container was subjected UV-radiation for approximately 5 minutes, thus to effect curing.

The cured ink was a rich red color, exhibited a smooth surface without irregularities, and adhered well to the glass.

### EXAMPLE 2

A yellow coloured ink composition in accordance with the invention was made up as follows:

| | Grams | w/w% |
|---|---|---|
| Cationically UV-curable cycloaliphatic epoxide (CYRACURE UVR 6110) | 50.00 | 50.63 |
| Ester-containing polyol (POLYOL 310) | 6.25 | 6.33 |
| Photoinitiator (CYRACURE UVI 6974) | 5.00 | 5.06 |
| Defoaming agent (BYK-053) | 7.50 | 7.59 |
| Yellow Organic Pigment (IRGAZAN Yellow 2GLTE) | 30.00 | 30.39 |

The first three ingredients were mixed together, and then the pigment was added.

The ink was transferred to the outer surface of a glass container using a silk-screen process.

The glass container was then subjected UV radiation for approximately 5 minutes, thus to effect curing.

The cured ink was a brilliant yellow, exhibited a smooth surface without irregularities, and adhered well to the glass.

### EXAMPLE 3

A red coloured ink composition was made in accordance with the invention as follows:

| | Grams | w/w% |
|---|---|---|
| Cationically UV-curable cycloaliphatic epoxide (CYRACURE UVR 6110) | 50.00 | 50.63 |
| Ester-containing polyol (POLYOL 310) | 6.25 | 6.33 |
| Photoinitiator (CYRACURE UVI 6974) | 5.00 | 5.06 |
| Defoaming agent (BYK-053) | 7.50 | 7.59 |
| Red Organic Pigment (IRGAZAN Red DPP 80) | 30.00 | 30.39 |

The first three ingredients were mixed together, followed by the pigments.

The ink was then transferred onto the outside of a black plastic (polyethylene) container using a silk screen of about 50 fibres per square centimetre (320 fibres per square inch) having indicia imprinted thereon.

The container was subjected UV radiation on a 300 watt/9.2 metres (30 feet) per minute UV-conveyor for approximately 5 minutes, thus to effect curing.

The cured ink was a deep red colour, exhibited a smooth surface without irregularities, and adhered well to the container. Moreover and very importantly, the red ink was opaque over the black plastic, and thus exhibited a true red colour.

### EXAMPLE 4

The ink composition of Example 1 was applied to a glass bottle with silk screen having a 255 line (about 40 fibres per square centimetre, or 255 fibres/square inch) screen with a decorative design imprinted on it.

The ink-decorated bottle was subjected to UV radiation on a 300 watt/9.2 metres (30 feet) per minute UV-conveyor for 7 minutes to effect curing.

Gold hot-stamping foil (Crown Royal Leaf, Paterson, New Jersey, U.S.A.) was compressed against the decorated portion of the container, with a die heated to 395K (250°F), for several seconds.

On removal of the die the release layer of hot-stamping foil laminate released the back film carrier, leaving the metallic laminate portion of the foil adhered to the cured ink design, giving a metallic gold appearance.

### EXAMPLE 5

The ink composition of Example 1 was used to hand-paint a floral design onto a clear polyethylene plastic container, using a fine-tip sable brush.

The container was subjected UV radiation for a period of 5 minutes by passing through a 300 watt/9.2 metres (30 feet) per minute UV-conveyor.

The ink design cured smoothly, and was a rich, deep red colour.

### EXAMPLE 6

The ink composition of Example 1 was silk-screened onto a black coloured plastic polyethylene bottle, using a 255 line (about 40 fibres per square centimetre, or 255 fibres/square inch) screen with a rose design imprinted on it.

The bottle was subjected to UV-curing by passing through a 300 watt/9.2 metres (30 feet) per minute UV-conveyor for 8 minutes.

The ink rose design was deep red in colour.

Next, the rose design was preferentially hot-stamped by pressing a layer of gold hot-stamping foil against the rose with a heated compress having a design which, when compressed against the rose design in exact registration, provided a rose which had petals tipped in gold.

The compress was heated to approximately 288K (300°F), and the hot-stamping foil was compressed against the rose design for approximately several seconds.

The rose design adhered permanently to the container, and was suitable for commercial use.

### EXAMPLE 7

A coloured ink composition was made up as follows:

| | |
|---|---|
| Aromatic urethane methacrylate (EBERCRYL 6700) | 55 grams |
| Tetrahydrofurfuryl acrylate (SARTOMER 302) | 20 grams |
| Isobornyl acrylate (SARTOMER 506) | 20 grams |
| Defoamer (BYK - 052) | 0.5 grams |
| Photoinitiator (IRGACURE) | 5 grams |
| Red Organic Pigment (IRGAZAN Red DPP 80) | 25 grams |
| Yellow Organic Pigment (IRGAZAN Yellow 2GLTE) | 5 grams |

The first four ingredients were mixed together, followed by the pigments.

The ink was then transferred onto the outer surface of a glass container using a silk-screening process.

The glass was subjected to UV-radiation for approximately 8 minutes, thus to effect curing.

The cured ink was a rich red colour, and exhibited a smooth surface without irregularities.

### EXAMPLE 8

An ink composition was prepared as follows:

| | |
|---|---|
| Urethane methacrylate | 27.00 parts |
| High-boiling methacrylate resin | 55.00 parts |
| Acrylic acid | 5.00 parts |
| Hydroxyethylmethacrylate | 5.00 parts |
| Photoinitiator | 5.00 parts |
| Silane | 3.00 parts |
| Red Organic Pigment (IRGAZAN Red DPP 80) | 25.00 parts |

The resulting ink composition was applied to the outside of a clear polyethylene plastic container, and cured by subjecting to UV radiation for 5 minutes. The cured ink was a bright red colour, and adhered well to the container.

## Claims

1. A radiation-curable, pigmented ink composition, comprising:
a) a radiation-curable component capable, when applied directly to a substrate and cured thereon by incident radiation, of bonding to the substrate; and
b) a pigment component which is one or a mixture of more than one pyrrolopyrrol and/or isoindolinone pigment(s).

2. A radiation-curable, pigmented ink composition as claimed in claim 1, which contains from 10% to 95% by weight of the radiation-curable component.

3. A radiation-curable, pigmented ink composition as claimed in claim 1 or claim 2, which contains from 1% to 50% by weight of said pigment(s).

4. A radiation-curable, pigmented ink composition as claimed in any of the preceding claims, in which the radiation-curable component is one capable of being cured by exposure to actinic radiation.

5. A radiation-curable, pigmented ink composition as claimed in claim 4, in which the radiation-curable component is one capable of being cured by exposure to ultraviolet radiation.

6. A radiation-curable, pigmented ink composition as claimed in any of the preceding claims, in which the radiation-curable component is or includes a monomer and/or a polymer having a molecular weight below 50,000.

7. A radiation-curable, pigmented ink composition as claimed in claim 6, in which the radiation-curable component is a monomer.

8. A radiation-curable, pigmented ink composition as claimed in claim 6 or claim 7, in which the monomer is one or a mixture of more than one of the following, namely epoxide, a cycloaliphatic epoxide, vinyl chloride, styrene, ethyl acrylate, vinyl acetate, an hydroxy alkyl acrylate, an hydroxy alkyl methacrylate, vinyl butyrate, vinyl methyl ether, methyl methacrylate, isobornyl acrylate and acrylonitrile.

9. A radiation-curable, pigmented ink composition as claimed in any of the claims 6 to 8, in which the monomer is or includes a cationically UV-curable cycloaliphatic epoxide.

10. A radiation-curable, pigmented ink composition as claimed in any of the preceding claims, in which the radiation-curable component additionally comprises from 1% to 20% of an ester-containing polyol having a molecular weight of less than 850 and a viscosity of less than 0.6Pa s (60 poises).

11. A radiation-curable, pigmented ink composition as claimed in claim 10, in which the ester-containing polyol is or includes the reaction product between a polycarboxylic acid and a polyol.

12. A radiation-curable, pigmented ink composition as claimed in claim 10 or claim 11, in which the ester-containing-polyol is or includes a polycaprolactone polyol.

13. A radiation-curable, pigmented ink composition as claimed in any of the preceding claims, in which the radiation-curable component additionally comprises from 3% to 15% of a photoinitiator.

14. A radiation-curable, pigmented ink composition as claimed in any of the preceding claims, which comprises:
- from 15% to 40% by weight of one or more pyrrolopyrrol pigment(s) and/or isoindolinone pigment(s);
- from 35% to 85% by weight of a cationically UV-curable cycloaliphatic epoxide;
- from 3% to 15% by weight of a triaryl sulphonium salt serving as photoinitiator;
- from 1% to 20% by weight of a polyalkyl acrylic defoaming agent; and
- from 3% to 15% by weight of a polycaprolactone polyol.

15. A radiation-curable, pigmented ink composition as claimed in claim 14, in which the pigment is one or a mixture of more than one of the following, namely pyrrolo 3,4-C pyrrol-1,4-dione, 2,5-dihydro-3,6-di-4-chlorophenyl and 2,3,4,5-tetrachloro-6-cyano-benzoic acid methyl ester which has been reacted with 2-methyl-1,3-benzenediamine and sodium methoxide.

16. A radiation-curable, pigmented ink composition as claimed in claim 14 or claim 15, in which the cationically UV-curable cycloaliphatic epoxide is one or a mixture of more than one of the following, namely 3,4-epoxycyclohexylmethyl-3,4-epoxycyclohexane carboxylate, bis-(3,4-epoxy-cyclohexylmethyl-adipate, vinylcyclohexene diepoxide, bis(2,3-epoxycyclophenyl-ether, epoxidized butadiene and 2,3-epoxy-2-methylcyclohexyl-methyl-3, 4-epoxy-2-methylcyclohexane carboxylate.

17. A radiation-curable, pigmented ink composition as claimed in any of the claims 14 to 16, in which the polyalkyl acrylic defoaming agent is polyvinyl butyl ether.

18. A radiation-curable, pigmented ink composition as claimed in any of the claims 14 to 17, in which the polycaprolactone polyol is trimethylolpropane caprolactone.

19. A method for applying a coloured decoration to a substrate, comprising the steps of:
a) applying a radiation-curable, pigmented ink composition to the substrate in a predetermined design, said composition comprising a radiation-curable component capable when cured of bonding to the substrate, and a pigment component which is or includes one or more pyrrolopyrrol and/or isoindolinone pigment(s), as claimed in any of the preceding claims; and
b) curing the radiation-curable ink on the substrate by exposure to the radiation by which it is curable, thereby bonding the ink to the substrate.

20. A method as claimed in claim 19, in which the radiation-curable component constitutes from 10% to 95% by weight of the pigmented ink composition.

21. A method as claimed in claim 19 or claim 20, in which the pigment component constitutes from 1% to 50% by weight of the composition.

22. A method as claimed in claim 21, in which the radiation-curable component is one that is capable of being cured by exposure to UV-radiation.

23. A method as claimed in claim 22, in which the radiation-curable component is or includes cationically UV-curable cycloaliphatic epoxide(s).

24. A method as claimed in any of claims 19 to 23, in which said pigment is one or a mixture of more than one of the following, namely pyrrol 3,4-C pyrrol-1,4-dione, 2,5-dihydro-3,6-di-chlorophenyl and 2,3,4,5-tetrachloro-6-cyano-benzoic acid methyl ester which has been reacted with 2-methyl-1,3-benzenediamine and sodium methoxide.

25. A method as claimed in any of claims 19 to 24, in which the radiation-curable, adhesive, pigmented ink composition is applied to the substrate via a silk screen.

26. A method as claimed in any of the claims 19 to 25, in which the substrate is glass, plastic or ceramic ware.

27. A method as claimed in any of claims 19 to 26, in which the substrate is a container.

28. A method for decorating a substrate with both coloured ink and hot-stamping foil, comprising;
a) applying a pigmented ink composition comprising a radiation-curable component and one or a mixture of more than one pyrrolopyrrol and/or isoindolinone pigment(s) to the substrate in a predetermined design, said ink being capable when cured of bonding to the substrate;
b) curing the ink on the substrate by exposing it to radiation by which it is curable, thereby bonding the ink to the substrate;
c) pressing a sheet of hot-stamping foil against the substrate with a compress heated to a temperature sufficient to cause the foil to adhere to the heated, cured ink design but not to the ink-free areas of the substrate; and
d) removing the compress thereby leaving behind that portion of the foil which has adhered to the ink design.

29. A container having an inner surface and an outer surface, in which bonded to the outer surface in a predetermined design is a coating of a cured adhesive pigmented ink composition comprising both (i) a radiation-cured component, bonded to the substrate, and (ii) a pigment component which is or includes one or a mixture of more than one pyrrolpyrrol and/or isoindolinone pigment(s).

30. A container as claimed in claim 29 which is glass.

31. A container as claimed in claim 29 which is plastic.
